# EUROPÄISCHE PATENTSCHRIFT

(11) **EP 4 686 841 B1**
(45) Veröffentlichungstag und Bekanntmachung des Hinweises auf die Patenterteilung: **09.12.2026**
(21) Anmeldenummer: 25192908.9
(22) Anmeldetag: 30.07.2025
(51) Int. Cl.: F16B 13/12

(54) **DÜBEL MIT WEICHERER DÜBELHÜLSE UND HÄRTEREN SPREIZEINLAGEN**
DOWEL WITH A SOFTER DOWEL SLEEVE AND HARDENER SPREADING INSERTS
CHEVILLE AVEC DOUILLE DE CHEVILLE PLUS SOUPLE ET INSERTS EXPANSIBLES À DURCISSEUR

(30) Priorität: 31.07.2024 DE 102024121863
(43) Veröffentlichungstag der Anmeldung: 04.02.2026
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-B1- 1 135 618

## Beschreibung

Die Erfindung betrifft einen Dübel, eine Dübelanordnung und ein Verfahren zum Herstellen eines Dübels.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

Kunststoff-Rahmendübel werden verwendet, um verschiedene Anbauteile aus Holz, Metall usw. an verschiedenen Untergründen wie Beton, Porenbeton, Voll- und Lochsteinen zu befestigen. Dafür wird die Dübelhülse durch das Anbauteil gesteckt und mit einer Schraube im Untergrund verspreizt. Teile der Dübelhülse werden durch das Einschrauben der Schraube an die Bohrlochwandung gedrückt oder klappen in den Hohlkammern der Lochsteine aus der zylinderförmigen Dübelhülse heraus, um einen Hinterschnitt in der Hohlkammer zu ermöglichen.

Beim Einschrauben der Schraube in den Dübel werden Drehmomente auf die Dübelhülse übertragen, welche über das Anbauteil und den Untergrund unterbunden werden müssen. Dies ist gerade bei Anbauteilen mit glatter Lochwandung und filigranen Lochsteinen problematisch. Hohe Tragfähigkeiten im Untergrund können erzielt werden, wenn der Kunststoff der Dübelhülse hart ist. Bei zylindrischen Bohrlöchern mit einer gewissen Rauigkeit im Untergrund wird somit die volle Tragfähigkeit des Untergrundes ausgenutzt. Bei Lochsteinen werden steife Teile der Dübelhülse nach außen gedrückt, vergrößern die Fläche des Hinterschnitts und sind sehr stabil. Andererseits wird das Einschraubmoment der Schraube in die Dübelhülse deutlich erhöht, da die steife Dübelhülse deutlich schwerer gespreizt werden kann. Ein Mitdrehen der Dübelhülse im Bohrloch ist die Folge.

Aus der EP 1 135 618 B1 ist ein hülsenförmiger Spreizdübel bekannt, der als Zweistoff-Dübel aus zwei Werkstoffen unterschiedlicher Härte hergestellt ist.

Es ist eine Aufgabe der vorliegenden Erfindung, einen Dübel bereitzustellen, der in einen Untergrund einfach, schnell, zuverlässig und mit einer hohen Verankerungskraft gesetzt werden kann.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Dübel geschaffen, aufweisend eine Dübelhülse aus einem ersten Kunststoff und mit einer Öffnung zum Einführen eines Befestigungselements, und eine Mehrzahl von keine weitere Dübelhülse bildenden Spreizeinlagen aus einem zweiten Kunststoff, die an der Dübelhülse angeordnet sind und zum Spreizen ausgebildet sind, wenn das Befestigungselement in die Öffnung eingeführt wird, wobei die Dübelhülse alle Bereiche des Dübels bildet, mit denen das Befestigungselement beim Einführen in die Öffnung in Kontakt kommt, um den Dübel in einem Verankerungsgrund mit Kontakt gegen eine Wandung des Verankerungsgrunds zu drücken und/oder den Dübel zur Hinterschnittbildung in mindestens einem Hohlraum im Verankerungsgrund auszuklappen, wobei die Spreizeinlagen Bereiche bilden, die beim Einführen des Befestigungselements in die Öffnung mit Kontakt gegen eine Wandung des Verankerungsgrunds gedrückt werden und/oder zur Hinterschnittbildung in mindestens einem Hohlraum in dem Verankerungsgrund ausklappen, und wobei der erste Kunststoff weicher als der zweite Kunststoff ist.

Gemäß einem anderen Ausführungsbeispiel der vorliegenden Erfindung ist eine Dübelanordnung bereitgestellt, aufweisend einen Dübel mit den oben beschriebenen Merkmalen und ein Befestigungselement (zum Beispiel eine Schraube) zum Einführen in oder eingeführt in die Öffnung des Dübels.

Gemäß noch einem anderen Ausführungsbeispiel der vorliegenden Erfindung ist ein Verfahren zum Herstellen eines Dübels, beispielsweise eines Dübels mit den oben beschriebenen Merkmalen, bereitgestellt, wobei das Verfahren ein Bilden einer Dübelhülse aus einem ersten Kunststoff und mit einer Öffnung zum Einführen eines Befestigungselements, ein Bilden einer Mehrzahl von keine weitere Dübelhülse bildenden Spreizeinlagen aus einem gegenüber dem ersten Kunststoff härteren zweiten Kunststoff, die an der Dübelhülse angeformt sind und zum Spreizen ausgebildet sind, wenn das Befestigungselement in die Öffnung eingeführt wird, ein Ausbilden des Dübels derart, dass die Dübelhülse alle Bereiche des Dübels bildet, mit denen das Befestigungselement beim Einführen in die Öffnung in Kontakt kommt, um den Dübel in einem Verankerungsgrund mit Kontakt gegen eine Wandung des Verankerungsgrunds zu drücken und/oder den Dübel zur Hinterschnittbildung in mindestens einem Hohlraum im Verankerungsgrund auszuklappen, und ein Ausbilden des Dübels derart aufweist, dass die Spreizeinlagen Bereiche bilden, die beim Einführen des Befestigungselements in die Öffnung mit Kontakt gegen eine Wandung des Verankerungsgrunds gedrückt werden und/oder zur Hinterschnittbildung in mindestens einem Hohlraum in dem Untergrund ausklappen.

Gemäß einem exemplarischen Ausführungsbeispiel der Erfindung wird ein Dübel mit einer Dübelhülse aus einem ersten, relativ weichen Kunststoff gefertigt. Die Dübelhülse hat eine Öffnung oder einen Führungskanal zum Einführen eines Befestigungselements, wie beispielsweise einer Schraube. Darüber hinaus sind mehrere Spreizeinlagen aus einem zweiten, härteren Kunststoff an der Dübelhülse angeordnet. Diese Spreizeinlagen können separat voneinander vorgesehen werden und bilden daher keine weitere umfänglich geschlossene Dübelhülse. Die Spreizeinlagen sind zum Spreizen konfiguriert, wenn das Befestigungselement zum Spreizen des Dübels in die Öffnung eingeführt wird. Mit Vorteil bildet die weichere Dübelhülse alle Bereiche des Dübels, mit denen das Befestigungselement beim Einführen in die Öffnung in Kontakt kommt, wenn der Dübel in einem Verankerungsgrund (zum Beispiel einem Vollkörper wie Massivbeton) mit Kontakt gegen eine Wandung des Verankerungsgrunds gedrückt wird und/oder wenn der Dübel zur Hinterschnittbildung in mindestens einem Hohlraum im Verankerungsgrund ausklappt (zum Beispiel in einem Hohlkörper wie Ziegel). Dies stellt sicher, dass das Spreizen des Dübels mit geringem Kraftaufwand möglich ist, da das Befestigungselement nur in Kontakt mit der weicheren Dübelhülse gerät. Weiter vorteilhaft können die Spreizeinlagen Bereiche bilden, die beim Einführen des Befestigungselements in die Öffnung mit Kontakt gegen eine Wandung des Verankerungsgrunds gedrückt werden und/oder zur Hinterschnittbildung in mindestens einem Hohlraum in dem Verankerungsgrund ausklappen. Auch dies hat Vorteile: Denn die eigentliche Kraftübertragung vom Dübel auf den Verankerungsgrund bzw. der befestigende Formschluss wird zumindest auch durch die härteren Spreizeinlagen bewerkstelligt, was zu einer hohen Verankerungskraft führt. In diesem Zusammenhang ist vorteilhaft, dass der erste Kunststoff weicher als der zweite Kunststoff ist (beispielsweise deshalb, weil nur der zweite Kunststoff, nicht aber der erste Kunststoff eine Faserverstärkung und/oder Kugelverstärkung aufweist). Der nur scheinbare Widerspruch zwischen einer weichen Dübelhülse zum leichten Einschrauben der Schraube und einer harten Dübelhülse für hohe Tragfähigkeiten kann durch eine Dübelhülse mit Spreizeinlagen gelöst werden, die aus zwei Kunststoffkomponenten mit unterschiedlicher Härte oder Festigkeit hergestellt werden. Die Bereiche, in denen die Schraube oder ein anderes Befestigungselement mit der Dübelhülse Kontakt hat oder die zum Auslösen des Aufspreizens oder Ausklappens dienen, sind aus einem weicheren Kunststoff ausgeführt. Die Bereiche, welche Kontakt zur Bohrlochwandung haben oder einen steifen Hinterschnitt bilden sollen, sind zumindest teilweise aus einem härteren Kunststoff ausgeführt. Anschaulich kann gemäß einem exemplarischen Ausführungsbeispiel der Erfindung ein Zweikomponenten-Dübel bereitgestellt werden, bei dem eine konventionell eingesetzte zweite Hülse durch isolierte oder inselartige Spreizeinlagen oder -stege ersetzt ist. Hierbei sind unterschiedlichste Konfigurationen möglich: Beispielsweise können besagte Spreizeinlagen aus dem härteren Kunststoff nur kopfseitig, nur fußseitig oder kopf- und fußseitig mit der Dübelhülse aus dem weicheren Kunststoff verbunden sein, zum Beispiel stoffschlüssig oder verklemmt. Ein vollumfänglicher Ring kann für die folglich keine weitere Spreizhülse bildenden Spreizeinlagen aus dem härteren Kunststoff weggelassen werden, um dadurch die Rigidität des Dübels sensitiv gering zu halten und vorzugsweise auf die Bereiche zu fokussieren, wo hartes Kunststoffmaterial zum Anlegen an die Bohrlochwandung oder zur Hinterschnittbildung eingesetzt wird.

Im Weiteren werden zusätzliche Ausführungsbeispiele des Dübels, der Dübelanordnung und des Verfahrens beschrieben.

Das härtere zweite Kunststoffmaterial ermöglicht eine hocheffiziente Kraftübertragung auf die Bohrlochwandung. Das weichere erste Kunststoffmaterial erlaubt ein Einschrauben einer Schraube in die Öffnung des Dübels mit moderatem Kraftaufwand bzw. Drehmoment. Dadurch kann sowohl ein übermäßiger Kraftaufwand als auch ein unerwünschtes Abdrehen der Schraube oder ein Ausbrechen des Antriebs der Schraube vermieden werden. Gerade bei filigranen Stegen in einem Hohlbaustoff wie Ziegel kann ein herkömmlich problematisches Ausbrechen des Steins gemäß einem exemplarischen Ausführungsbeispiel der Erfindung vermieden werden. Auf diese Weise kann gleichzeitig eine hohe Anwendungssicherheit mit einer hohen Tragfähigkeit kombiniert werden.

Gemäß einem exemplarischen Ausführungsbeispiel ermöglicht eine weichere Dübelhülse ein leichtes Einschrauben einer Schraube. Die Kombination mit härteren kissenartigen oder punktuellen Spreizeinlagen, vorzugsweise nur an der Außenseite des Dübels, bewirkt eine hohe Tragfähigkeit. Beispielsweise kann eine solche hohe Tragfähigkeit durch Formschluss der Spreizeinlagen erreicht werden, insbesondere unter Bildung von Hinterschnitten in einem Hohlbaustein.

Gemäß einem Ausführungsbeispiel kann die Dübelhülse einen Fuß mit der Öffnung zum Einführen eines Befestigungselements und einen dem Fuß gegenüberliegenden Kopf aufweisen. Die Dübelhülse kann zumindest entlang eines Teils einer Längserstreckung zwischen Fuß und Kopf umfänglich geschlossen sein. Anschaulich kann die Dübelhülse einen ringförmig geschlossenen Abschnitt aufweisen. Hingegen können die Spreizeinlagen, die keine weitere Dübelhülse bilden, von einem umfänglich geschlossenen Ringabschnitt frei sein.

Gemäß einem Ausführungsbeispiel kann die Dübelhülse am Kopf einen Schlitz zum Fördern des Spreizens der Dübelhülse durch das Befestigungselement aufweisen. Der Kopf kann kappenartig ausgebildet sein, wobei die Kappe einen Schlitz in einer Ebene aufweisen kann, die durch eine axiale Richtung des Dübels und eine hierzu senkrechte Richtung definiert sein kann. Durch einen solchen Kopf kann die Dübelhülse kopfseitig in zwei (oder mehr) Spreizzungen aufgeteilt sein, die durch Einführen eines Befestigungselements in die Öffnung des Dübels aufgespreizt werden können. Der Schlitz fördert somit ein Spreizen des Dübels und reduziert die zum Spreizen des Dübels erforderliche Kraft.

Gemäß einem Ausführungsbeispiel kann jede der Spreizeinlagen einen Teil einer Außenfläche des Dübels bilden. Insbesondere kann eine Innenfläche der Dübelhülse aus dem weicheren Kunststoffmaterial von Spreizeinlagen aus dem härteren Kunststoffmaterial frei sein. An der Außenfläche der Dübelhülse können mehrere Bereiche mit jeweiligen Spreizeinlagen besetzt sein, die beim Spreizen des Dübels von der Dübelhülse nach außen hin mitgenommen werden können und sich gegen eine Wandung eines Untergrunds legen können bzw. in Hohlbereiche des Untergrunds formschlüssig eingreifen können.

Gemäß einem Ausführungsbeispiel kann zumindest ein Teil der Spreizeinlagen an einer Außenseite der Dübelhülse und entlang einer Dübelachse aufgereiht sein, insbesondere als eine Reihe oder als mehrere parallele Reihen von axial aufgereihten Spreizeinlagen. Beispielsweise kann eine erste Gruppe von Spreizeinlagen an einem äußeren Mantelflächenabschnitt der Dübelhülse entlang einer axialen Richtung des Dübels axial aufgereiht sein. An einem anderen, beispielsweise gegenüberliegenden äußeren Mantelflächenabschnitt der Hülse kann eine zweite Gruppe von Spreizeinlagen entlang einer axialen Richtung des Dübels axial aufgereiht sein. Spreizeinlagen einer jeweiligen Gruppe können voneinander axial beabstandet sein. Allerdings können Spreizeinlagen einer jeweiligen Gruppe miteinander mittels Verbindungstegen verbunden sein. Solche Verbindungsstege können beim Spritzgießen der Spreizeinlagen auf einer Außenseite der vorzugsweise ebenfalls mittels Spritzgießen gebildeten Dübelhülse gebildet werden.

Gemäß einem Ausführungsbeispiel kann zumindest ein Teil der Spreizeinlagen als dreieckige Kissen ausgebildet sein. Die dreieckigen Kissen können zum Beispiel durch ein rechtwinkliges Dreieck gebildet werden, dessen beiden kürzere Seiten in axialer Richtung und in tangentialer Richtung sowie dessen längste Seite schräg zur axialen Richtung des Dübels angeordnet sein können. Solche Kissen aus dem härteren Kunststoff können sich beim Spreizen des Dübels gegen zugehörige Wandabschnitte einer Bohrlochwandung eines Verankerungsgrunds legen oder in Hohlräume des Verankerungsgrunds ausklappen.

Gemäß einem Ausführungsbeispiel können die als dreieckige Kissen ausgebildeten Spreizeinlagen jeweils paarweise einen gemeinsamen rechteckigen Spreizeinlagebereich bilden. Insbesondere kann eine diagonale Aussparung zwischen Spreizeinlagen eines jeweiligen Paars und/oder eine tangentiale Aussparung zwischen benachbarten Spreizeinlagebereichen gebildet sein. Zwei benachbarte dreieckige Kissen können somit gemeinsam eine rechteckige Anlagefläche gegen eine Wandung in einem Verankerungsgrund bilden und somit zu einer stabilen Verankerung des Dübels im Verankerungsgrund signifikant beitragen. Die beiden dreieckigen Kissen eines solchen rechteckigen Abschnitts aus dem härteren Kunststoff können jedoch auch getrennt voneinander spreizen, während eine Schraube in der Öffnung des Dübels vorwärts bewegt wird. Dies wiederum reduziert die Kraft zum Setzen des Dübels, da die Kissen einzeln und nacheinander gespreizt werden können. Gleichzeitig sorgt das Ausbilden einer rechteckigen Anlagefläche aus zwei dreieckigen Kissen des härteren zweiten Kunststoffs dafür, dass auch bei kleineren Hohlräumen individuelle dreieckige Kissen formschlüssig ausklappen können. Beispielsweise können zwei benachbarte dreieckige Kissen, die gemeinsam einen rechteckigen Abschnitt aus dem härteren zweiten Kunststoff bilden, an ihrer diagonalen Aussparung mittels eines Verbindungsstegs aus dem zweiten Kunststoff verbunden sein. Auch das axiale Beabstanden rechteckiger Abschnitte aus jeweils zwei dreieckigen Spreizeinlagen des zweiten Kunststoffs durch eine tangentiale Aussparung führt dazu, dass mit kleiner Setzkraft ein individuelles Ausklappen dreieckiger Spreizeinlagen in Hohlräume eines Verankerungsgrunds erfolgen kann und/oder ein individuelles Aufspreizen dreieckiger Spreizeinlagen gegen eine Wandung des Verankerungsgrunds stattfinden kann.

Gemäß einem Ausführungsbeispiel kann zumindest ein Teil der Spreizeinlagen mittels mindestens eines Verbindungsstegs miteinander verbunden sein. Vorteilhaft können solche Verbindungsstege zwischen benachbarten Spreizeinlagen ohne Zusatzaufwand gefertigt werden, indem die Spreizeinlagen aus dem zweiten Kunststoff gemeinsam mit den Verbindungsstegen aus dem zweiten Kunststoff auf eine Außenfläche der Dübelhülse aus den ersten Kunststoff mittels Spritzgießens aufgespritzt werden. Bei einer geeigneten Wahl von Werkzeugen und/oder Kernen können somit die Spreizeinlagen samt Verbindungstegen in einem gemeinsamen Verfahrensschritt gebildet werden und zur Erhöhung der Stabilität des Dübels miteinander verbunden werden. Allerdings können die Verbindungsstege so dünn ausgebildet werden, dass sich die einzelnen Spreizeinlagen beim Spreizen des Dübels wie individuelle oder separate Spreizeinlagen verhalten. Dadurch ist ein Setzen des Dübels mit geringer Setzkraft und ein individuelles Ausklappen oder Aufspreizen der Spreizeinlagen in einem Verankerungsgrund ermöglicht. Es ist auch möglich, die Verbindungsstege so auszubilden, dass diese beim Spreizen des Dübels definiert reißen.

Gemäß einem Ausführungsbeispiel kann der mindestens eine Verbindungssteg mehrere Verbindungsstege aufweisen, von denen jeder zwei jeweils entlang einer Dübelachse des Dübels benachbarte Spreizeinlagen miteinander verbindet. Beispielsweise können solche Verbindungsstege punktförmig ausgebildet werden und somit beim Spreizen des Dübels abgerissen werden. Die Stabilität einer Reihe von Spreizeinlagen, die an einer Außenseite der Dübelhülse axial aufgereiht sein können, kann dadurch erhöht werden, ohne dass ein individuelles Aufklappen oder Aufspreizen der einzelnen Spreizeinlagen nennenswert gehemmt wird.

Gemäß einem Ausführungsbeispiel kann der mindestens eine Verbindungssteg mindestens einen sich entlang einer Dübelachse des Dübels erstreckenden, insbesondere kammförmigen, Verbindungssteg aufweisen, der mindestens drei der Spreizeinlagen miteinander verbindet. Beispielsweise kann sich ein solcher langgestreckter Verbindungssteg entlang und parallel zu einer Reihe von axial aufgereihten Spreizeinlagen erstrecken und durch tangentiale Fortsätze seitlich mit den einzelnen Spreizeinlagen verbunden sein. Der langgestreckte Verbindungssteg selbst kann beispielsweise in eine Nut der Dübelhülse eingebettet sein oder über eine Außenfläche der Dübelhülse hervorstehen. Beim Spreizen des Dübels kann die Verbindung zwischen dem langgestreckten Verbindungssteg und den einzelnen Spreizeinlagen bestehen bleiben oder abgerissen werden, je nach Ausgestaltung des Verbindungsstegs.

Gemäß einem Ausführungsbeispiel kann der mindestens eine Verbindungssteg eine Sollbruchstelle aufweisen, die zum Brechen beim Spreizen des Dübels ausgebildet ist. Eine solche Sollbruchstelle eines Verbindungsstegs kann beispielsweise als Verengung des Verbindungsstegs gebildet werden, die eine Materialschwachstelle des Verbindungsstegs darstellt und beim Spreizen des Dübels definiert reißen kann. Auf diese Weise kann ein getrenntes Aufspreizen oder Aufklappen individueller Spreizeinlagen weiter gefördert werden und eine besonders geringe Setzkraft erreicht werden, ohne dass die Tragfähigkeit des Dübels in einem Verankerungsgrund reduziert wird.

Gemäß einem Ausführungsbeispiel kann der mindestens eine Verbindungssteg ausgebildet sein, eine Steifigkeit von beim Spreizen des Dübels nach außen klappenden Spreizeinlagen zu erhöhen. Es ist auch möglich, dass der mindestens eine Verbindungssteg ausgebildet ist, beim Spreizen des Dübels ein Ausklappen der Spreizeinlagen gegeneinander zu inhibieren. Bei einer solchen Ausgestaltung des Verbindungsstegs kann erreicht werden, dass die mittels des Verbindungsstegs verbundenen Spreizeinlagen sich beim Spreizen des Dübels weniger individuell verhalten als beispielsweise beim Vorsehen eines Verbindungsstegs mit Sollbruchstelle. Eine Steifigkeitserhöhung oder ein Fördern eines gemeinsamen Spreizens oder Ausklappens der mittels solcher Verbindungsstege verbundenen Spreizeinlagen kann für bestimmte Anwendungen vorteilhaft sein.

Gemäß einem Ausführungsbeispiel kann der mindestens eine Verbindungssteg ausgebildet sein, keine Versteifung der Dübelhülse zu bewirken. Somit können Verbindungsstege zwischen außen auf einer Dübelhülse angeformten Spreizeinlagen so konfiguriert sein, dass diese keine nennenswerte Erhöhung einer Setzkraft zum Spreizen der Dübelhülse aus dem weicheren ersten Material bewirken. Dies erlaubt das Setzen des Dübels mit mäßiger Kraft und ermöglicht gleichzeitig, dass sich die Spreizeinlagen aus dem härteren zweiten Kunststoff zuverlässig gegen Wandungsabschnitte des Verankerungsgrunds legen oder in Hohlräume des Verankerungsgrunds ausklappen. Beispielsweise können zu diesem Zweck die Verbindungswege ausreichend dünn, mit Sollbruchstelle und/oder ohne Quervernetzungen ausgebildet sein.

Gemäß einem Ausführungsbeispiel kann die Dübelhülse als eine erste Spritzgusskomponente gebildet sein und können die Spreizeinlagen (vorzugsweise gemeinsam mit Verbindungsstegen) als eine zweite Spritzgusskomponente gebildet sein, die auf die erste Spritzgusskomponente aufgespritzt und/oder in die erste Spritzgusskomponente eingespritzt ist. Insbesondere kann die Dübelhülse als Kern beim Aufspritzen der Spreizeinlagen eingesetzt werden. Eine solche Fertigung des Dübels aus zwei Spritzgusskomponenten bewirkt eine innige Verbindung von Dübelhülse und Spreizeinlagen und erlaubt gleichzeitig eine Herstellung des Dübels mit geringem Aufwand.

Insbesondere kann das Verfahren zum Herstellen ein Herstellen des Dübels im Mehrkomponentenspritzgussverfahren aufweisen. Bei dem Verfahren kann ein Bilden der Dübelhülse mittels Spritzgießens und/oder kann ein Bilden der Spreizeinlagen mittels Spritzgießens realisiert werden. Insbesondere kann das Verfahren ein Aufspritzen der Spreizeinlagen auf ein Äußeres der Dübelhülse aufweisen. Auf diese Weise kann der Dübel einfach und kostengünstig mittels Spritzgießens hergestellt werden. Darüber hinaus erlaubt die Kombination des Dübels aus zwei (oder mehr) Spritzgusskomponenten die Bereitstellung von spreizenden Komponenten unterschiedlicher Eigenschaften, beispielsweise unterschiedlicher Materialien. Auf diese Weise können die Spreizfunktion des Dübels, seine Setzkraft und/oder seine Tragfähigkeit verfeinert eingestellt werden.

Gemäß einem Ausführungsbeispiel können die Dübelhülse und die Spreizeinlagen im unverspreizten Zustand dreh- und zugfest miteinander verbunden sein. Dies bedeutet, dass der Dübel mit Dübelhülse und Spreizeinlagen vor dem Spreizen einstückig gehandhabt werden kann und nicht in seine Einzelteile zerfällt. Beispielsweise durch Einführen des Befestigungselements in die Öffnung der Dübelhülse kann die dreh- und zugfeste Verbindung abschnittsweise aufgelöst werden. Bei einer alternativen Gestaltung des Dübels kann selbst bei Einführen des Befestigungselements in die Öffnung der Dübelhülse die dreh- und zugfeste Verbindung aufrechterhalten bleiben.

Gemäß einem Ausführungsbeispiel können die Spreizeinlagen die Dübelhülse im unverspreizten Zustand zumindest teilweise umhüllen. Insbesondere können die Spreizeinlagen ausschließlich auf der Außenseite der Dübelhülse aufgebracht werden. Dies stellt sicher, dass die Schraube beim Setzen des Dübels nur das weichere erste Kunststoffmaterial berührt, was die Setzkraft gering hält. Gleichzeitig ermöglicht dies, dass die aus dem härteren zweiten Werkstoffmaterial gefertigten Spreizeinlagen die eigentliche Verbindung zwischen Dübel und Verankerungsgrund bewirken, was die Tragfähigkeit erhöht.

Gemäß einem Ausführungsbeispiel kann die Dübelhülse durch das Befestigungselement selbst aufspreizbar sein und können die Spreizeinlagen durch die Dübelhülse aufspreizbar sein. Anders ausgedrückt wirkt das Befestigungselement, beispielsweise eine Schraube, ein Nagel oder ein Stift, beim Eindringen in die Öffnung der weicheren Dübelhülse ausschließlich auf Letztere, was zu einer mäßigen Setzkraft führt. Das Aufspreizen der Spreizeinlagen wird hingegen durch das Aufspreizen der Dübelhülse bewirkt, ohne dass das Befestigungselement kontaktbehaftet auf die härteren Spreizeinlagen einwirkt. Anders ausgedrückt ist die Einwirkung des Befestigungselements auf die Spreizeinlagen nur indirekter Natur, nämlich vermittels der weicheren Dübelhülse.

Gemäß einem Ausführungsbeispiel kann die Dübelhülse in ihrer Umfangsfläche mindestens eine Aussparung, insbesondere mindestens eine sich schräg zu einer Dübelachse erstreckende Aussparung und/oder mindestens eine sich tangential erstreckende Aussparung, aufweisen, die ein Spreizen der Dübelhülse erleichtert. Solche Aussparungen an der Mantelfläche der Dübelhülse, die beispielsweise als Durchbrechungen oder gedünnte Abschnitte der Dübelhülse realisiert werden können, fördern zusätzlich die Spreizfähigkeit der ohnehin aus dem weicheren ersten Kunststoff gefertigten Dübelhülse. Beispielsweise können Z-förmige Aussparungen in oder an einer Mantelfläche der Dübelhülse vorgesehen sein.

Gemäß einem Ausführungsbeispiel können die Spreizeinlagen alle Bereiche des Dübels bilden, die beim Einführen des Befestigungselements in die Öffnung mit Kontakt gegen eine Wandung des Verankerungsgrunds gedrückt werden und/oder zur Hinterschnittbildung in mindestens einem Hohlraum in dem Verankerungsgrund ausklappen. Mit Vorteil können also alle Berührflächen der Schraube mit dem Dübel durch das weiche erste Kunststoffmaterial gebildet sein und alle Berührflächen des Dübels mit der Wand durch das harte zweite Kunststoffmaterial gebildet sein.

Gemäß einem Ausführungsbeispiel kann zumindest ein Teil der Spreizeinlagen mittels mindestens eines Scharniers an die Dübelhülse angebunden sein. Anschaulich kann das Scharnier als Klappgelenk fungieren. Bevorzugt kann das mindestens eine Scharnier aus Material, insbesondere lokal gedünntem Material, der Dübelhülse gebildet sein. Vorzugsweise kann das mindestens eine Scharnier ein Filmscharnier sein. Gemäß einer bevorzugten Ausgestaltung kann sich das mindestens eine Scharnier entlang einer Dübelachse erstrecken. Mit Vorteil können die Spreizeinlagen durch Scharniere, vorzugsweise Filmscharniere, der Dübelhülse, angebunden werden, wobei sich die Scharniere bevorzugt in Längsrichtung des Dübels erstrecken. Dies fördert ein definiertes und kraftarmes Ausklappen der Spreizeinlagen.

Gemäß einem Ausführungsbeispiel kann der zweite Kunststoff Verstärkungsstrukturen aufweisen, insbesondere faserverstärkt und/oder kugelverstärkt sein. Beispielsweise kann der weichere erste Kunststoff zum Beispiel Polyamid aufweisen. Der härtere zweite Kunststoff kann beispielsweise ebenfalls Polyamid aufweisen, das allerdings beim zweiten Kunststoff glasfaserverstärkt oder glaskugelverstärkt sein kann. Alternativ oder ergänzend ist es möglich, dass die ersten und zweiten Kunststoffe unterschiedliche Kunststoffmaterialien sind, um die unterschiedlichen Härten oder Festigkeiten einzustellen.

Als Materialien für den Dübel, insbesondere als erster Kunststoff bzw. zweiter Kunststoff, eignen sich insbesondere spritzgussfähige Kunststoffe. Besonders geeignet sind Polyamid, Polypropylen, Polyethylen, Polyester und AcrylnitrilButadien-Styrol-Copolymer (ABS) als Reinkunststoffe, sowie deren Blends. Ferner geeignet sind Polyvinylchlorid (PVC), Styrol-Butadien-Kautschuk (SBR), Ethylen-Propylen-Dien-Kautschuk (EPDM), Polymethylmethacrylat (PMMA), Polycarbonat (PC), Polyoxymethylene (POM) und diverse Elastomere. Verstärkungsstrukturen, beispielsweise Glasfasern und/oder Glaskugeln können insbesondere im zweiten Kunststoff enthalten sein, um diesen härter als den ersten Kunststoff zu gestalten.

Der erste Kunststoff kann weicher als der zweite Kunststoff sein. Dementsprechend kann der zweite Kunststoff härter als der erste Kunststoff sein. Die Härte des zweiten Kunststoffs kann somit größer als die Härte des ersten Kunststoffs sein. Unter Härte kann der mechanische Widerstand eines Werkstoffes (auch als Prüfstück bezeichnet) gegen das mechanische Eindringen eines anderen härteren Körpers (auch als Eindringkörper bezeichnet) verstanden werden. Unter Härte kann in diesem Zusammenhang insbesondere die Shore-Härte, beispielsweise die Shore D-Härte, verstanden werden. Beispielsweise kann die Härte des ersten oder zweiten Kunststoffs entsprechend der Norm DIN EN ISO 868 definiert sein. Unter der Härte des Kunststoffs kann alternativ auch die Festigkeit des Kunststoffs verstanden werden. Es ist insbesondere möglich, dass der zweite Kunststoff eine höhere Festigkeit als der erste Kunststoff aufweist. Unter Festigkeit kann hierbei die Widerstandsfähigkeit des jeweiligen ersten oder zweiten Kunststoffs gegenüber Verformung und Trennung verstanden werden.

Gemäß einem Ausführungsbeispiel kann die Dübelanordnung einen Verankerungsgrund (zum Beispiel eine Mauerwerkswand) aufweisen, in den der Dübel eingeführt ist. Der Verankerungsgrund kann mit einem Setzloch (zum Beispiel einem Bohrloch) versehen werden, in das der Dübel mit darin eingeführtem Befestigungselement eingeführt wird. Zum Beispiel kann der Verankerungsgrund ein Vollkörper (zum Beispiel ohne Hohlkammern, beispielsweise Vollbeton) sein oder ein Hohlkörper mit mindestens einer Hohlkammer (zum Beispiel Ziegel) sein.

Im Rahmen dieser Anmeldung kann unter dem Begriff "Verankerungsgrund" insbesondere ein zum Verankern des Dübels und des Befestigungselements geeigneter Körper verstanden werden. Ein solcher Verankerungsgrund kann insbesondere eine Wand, weiter insbesondere eine vertikale Wand, sein. Materialien für einen solchen Verankerungsgrund sind insbesondere Holz oder Holzbaustoffe, oder aber auch Beton- und Mauerwerksbaustoffe, Metall, Gipskarton oder Kunststoffbauteile. Ferner kann ein solcher Verankerungsgrund auch ein beliebiger Kompositwerkstoff aus mehreren unterschiedlichen Materialkomponenten sein. Insbesondere kann ein Verankerungsgrund als Vollkörper oder als Hohlkörper ausgebildet sein. Im Rahmen dieser Anmeldung kann unter dem Begriff "Vollkörper" insbesondere ein Verankerungsgrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein. Im Rahmen dieser Anmeldung kann unter dem Begriff "Hohlkörper" insbesondere ein Verankerungsgrund verstanden werden, der im Inneren (insbesondere in einem Eindringbereich des Dübels und des Befestigungselements in den Verankerungsgrund) - zusätzlich zu einer Aufnahmeöffnung (zum Beispiel ein Bohrloch) zum Aufnehmen des Dübels - Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne oder Stege. Eine solche Mitdrehsicherung verunmöglicht oder unterdrückt, dass sich der Dübel unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Gemäß einem Ausführungsbeispiel kann im Inneren des Dübels Klebstoff (insbesondere ein einkomponentiger oder mehrkomponentiger Prozesswerkstoff, der durch Oberflächenhaftung und seine innere Festigkeit Verankerungsgrund, Dübel und/oder Befestigungselement mittels Klebens miteinander verbinden kann) aufweisen, der bei Einführen des Befestigungselements und daraus resultierendem Spreizen des Dübels aus dem Dübel austreten kann. Somit kann in dem Zweikomponenten-Dübel ein Klebstoffdepot oder ein Klebstoffbeutel enthalten sein, der neben der mechanischen Befestigung als chemischer Anker dient. Der Klebstoff kann insbesondere (Meth-)Acrylate, Silikone, Polyvinylalkohol (PVA), Polyurethan (PUR), Epoxidharz, Synthese- und/oder Naturkautschuk (insbesondere lösemittelhaltig), Vinylether, Siloxane, Silane und/oder silanmodifizierte Polymere, Polychloropene, sowie ein Phenolharz aufweisen.

Gemäß einem Ausführungsbeispiel kann der Verankerungsgrund mindestens eine Hohlkammer aufweisen, in der ein Teil des Klebstoffs angeordnet sein. Ist der Verankerungsgrund also als Hohlkörper ausgebildet, kann Klebstoff auch in Hohlkammern des Hohlkörpers fließen und an diesen Stellen, an denen eine mechanische Befestigung geschwächt sein kann, die Befestigungskraft maßgeblich erhöhen.

Gemäß einem Ausführungsbeispiel kann der Dübel als Kunststoff-Rahmendübel ausgebildet sein. Gemäß einem Ausführungsbeispiel kann der Dübel verwendet werden, um ein Anbauteil (beispielsweise aus Holz, Metall usw.) an einem Verankerungsgrund (wie Beton, Porenbeton, Voll- und Lochsteinen) zu befestigen. Dafür wird der Dübel durch das Anbauteil gesteckt und mit einer Schraube oder einem anderen Befestigungselement im Untergrund verspreizt.

Im Folgenden werden exemplarische Ausführungsbeispiele der vorliegenden Erfindung mit Verweis auf die folgenden Figuren detailliert beschrieben.
Figur 1 zeigt eine Seitenansicht eines Dübels gemäß einem exemplarischen Ausführungsbeispiel der Erfindung.
Figur 2 zeigt eine Seitenansicht eines Dübels gemäß einem anderen exemplarischen Ausführungsbeispiel der Erfindung.
Figur 3 zeigt eine vergrößerte Seitenansicht eines Teils des Dübels gemäß Figur 2.

Gleiche oder ähnliche Komponenten in unterschiedlichen Figuren sind mit gleichen Bezugsziffern versehen.

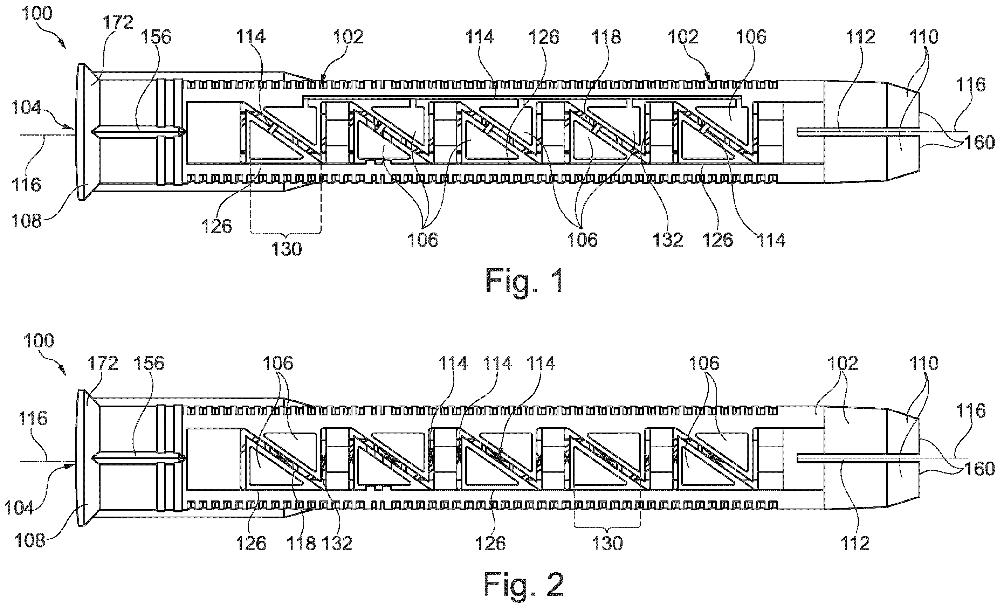

**Figur 1** zeigt eine Seitenansicht eines Dübels 100 gemäß einem exemplarischen Ausführungsbeispiel der Erfindung. Mit Vorteil weist der Dübel 100 eine weiche Dübelhülse 102 zum leichten Einschrauben einer Schraube und harte Elemente oder Spreizeinlagen 106 für eine hohe Tragfähigkeit sowohl bei Voll- als auch bei Lochsteinen auf. Dies wird insbesondere dadurch gefördert, dass ein erster Kunststoff der innenseitigen Dübelhülse 102 weicher als ein zweiter Kunststoff der einzelnen außenseitigen Spreizeinlagen 106 ist.

Der Dübel 100 weist als ersten Endabschnitt einen Fuß 108 mit einem außenseitigen ringförmigen Kragen 172 und einer Öffnung 104 zum Einführen eines vorzugsweise als Schraube ausgebildeten Befestigungselements (nicht gezeigt) auf. Die Öffnung 104 an der Außenseite des Dübels 100 im Bereich des Fußes 108 mündet im Inneren des Dübels 100 in einen Aufnahmekanal zum Aufnehmen des Befestigungselements. An seiner Außenseite hat der Fuß 108 eine Mitdrehsicherung 156 zum Vermeiden eines Mitdrehens des Dübels 100 bei einem drehenden Einbringen eines als Schraube ausgebildeten Befestigungselements in die Öffnung 104 und nachfolgend in den Aufnahmekanal. Die Mitdrehsicherung 156 kann zum Beispiel durch mehrere in Umfangsrichtung außenseitig verteilt angeordnete und radial über eine Mantelfläche der Dübelhülse 102 überstehende Dorne mit Schneidkanten ausgebildet sein. Diese Schneidkanten können sich nach Einführen des Dübels 100 in ein Bohrloch (oder dergleichen) in einem Untergrund in den Untergrund eingraben und dadurch einen Verdrehschutz bewerkstelligen.

Ferner weist der Dübel 100 als zweiten Endabschnitt, der dem Fuß 108 gegenüberliegt, einen kappenförmigen Kopf 110 am Einsteckende des Dübels 100 auf. Der kappenförmige Kopf 108 hat eine distale Stirnplatte 160.

Der in Figur 1 gezeigte Dübel 100 weist die Dübelhülse 102 aus einem ersten Kunststoff auf, beispielsweise Polyamid. Die abschnittsweise umfänglich geschlossene Dübelhülse 102 ist mit der Öffnung 104 mit axialem Einführ- oder Führungskanal zum Einführen des vorzugsweise als Schraube ausgebildeten Befestigungselements versehen. Darüber hinaus weist der Dübel 100 eine Vielzahl von räumlich voneinander getrennten Spreizeinlagen 106 aus einem zweiten Kunststoff auf. Beispielsweise kann der zweite Kunststoff ebenfalls Polyamid sein, der im Gegensatz zum ersten Kunststoff in der dargestellten Ausführungsform aber mittels Glasfasern oder dergleichen verstärkt ist. Dadurch ist der zweite Kunststoff härter und/oder fester als der erste Kunststoff. Anders als die integrale Dübelhülse 102 bilden die Spreizeinlagen 106 voneinander getrennte Kissen und somit keine weitere Dübelhülse. Die Spreizeinlagen 106 sind als räumlich voneinander beabstandete außenseitige Aufsätze auf der Dübelhülse 102 ausgeführt und bilden keine ringförmig geschlossene Struktur in Umfangsrichtung des Dübels 100. Ungeachtet ihrer für die Erhöhung der Tragfähigkeit vorteilhaft größeren Härte im Vergleich zur Dübelhülse 102 bilden die Spreizeinlagen 106 daher keine ringförmig geschlossene Hülse, sondern inselartige Kissen mit lokal erhöhter Härte und/oder Festigkeit. Durch die beschriebene Konfiguration ist gewährleistet, dass die von einem Benutzer aufzubringende Setzkraft bzw. das von einem Benutzer bereitzustellende Drehmoment zum Setzen des Befestigungselements in dem Dübel 100 moderat bleibt, da das Befestigungselement nur in Kontakt mit der weicheren Dübelhülse 102 gerät und nur diese unmittelbar radial aufweitet. Die individuellen Spreizeinlagen 106 als außenseitige Kissen an der externen Oberfläche der Dübelhülse 102 führen aufgrund ihrer im Vergleich zur Dübelhülse 102 höheren Härte zu einer stabilen Verankerung des Dübels 100 in einem Verankerungsgrund, erhöhen aber nicht in exzessiver Weise die Setzkraft.

Die Spreizeinlagen 106 sind an der äußeren Mantelfläche der Dübelhülse 102 angeordnet und zum Spreizen ausgebildet, wenn das Befestigungselement in die Öffnung 104 eingeführt wird. Mit Vorteil bildet die weichere Dübelhülse 102 alle Bereiche des Dübels 100, mit denen das Befestigungselement beim Einführen in die Öffnung 104 bzw. in den Führungskanal in direkten Berührkontakt kommt. Anders ausgebildet wird die Öffnung 104 vollständig durch das weichere Material der Dübelhülse 102 begrenzt, nicht durch das härtere Material der Spreizeinlagen 106. Wird das Befestigungselement in die Öffnung 104 des Dübels 100 eingeführt und vorgetrieben, wird der Dübel 100 in einem beispielsweise als Vollkörper ohne makroskopische Hohlräume ausgebildeten Verankerungsgrund mit Kontakt gegen eine Wandung des Verankerungsgrunds gedrückt. Wird das Befestigungselement in die Öffnung 104 des Dübels 100 eingeführt und vorgetrieben, klappen Komponenten des Dübels 100 in einem beispielsweise als Hohlkörper mit makroskopischen Hohlräumen ausgebildeten Verankerungsgrund zur Hinterschnittbildung in einen oder mehrere Hohlräume in dem Verankerungsgrund aus. Beim Setzen des Dübels 100 in einem Verankerungsgrund bilden die Spreizeinlagen 106 allein oder gemeinsam mit Mantelflächenabschnitten der Dübelhülse 102 Bereiche, die beim Einführen und Vortreiben des Befestigungselements in die Öffnung 104 bzw. den Führungskanal mit Kontakt gegen eine Wandung des Verankerungsgrunds gedrückt werden bzw. zur Hinterschnittbildung in mindestens einem Hohlraum in dem Verankerungsgrund ausklappen.

Wie bereits angesprochen, weist die Dübelhülse 102 den Fuß 108 mit der Öffnung 104 zum Einführen eines Befestigungselements und den dem Fuß 108 gegenüberliegenden Kopf 110 auf. Vorteilhaft kann die Dübelhülse 102 am Kopf 110 einen Schlitz 112 zum Fördern des Spreizens der Dübelhülse 102 durch das Befestigungselement aufweisen. Der Schlitz 112 erstreckt sich von der Stirnplatte 160 aus in die Dübelhülse 102 hinein und endet vor dem in axialer Richtung, d.h. entlang einer Dübelachse 116, vordersten Spreizeinsatz 106 des Dübels 100. Durch den Schlitz 112 wird die erforderliche Setzkraft zusätzlich reduziert.

Vorteilhaft bildet jede der Spreizeinlagen 106 einen Teil einer Außenfläche des Dübels 100 und ist auf einer äußeren Mantelfläche der Dübelhülse 102 angebracht, wohingegen eine Innenfläche der Dübelhülse 102 von Spreizeinlagen 106 frei ist. Dadurch ist sichergestellt, dass die harten bzw. festen Spreizeinlagen 106 nicht mit dem Befestigungselement in Berührkontakt geraten und somit die Setzkraft nicht erhöhen. Ferner ist dadurch sichergestellt, dass die härteren Spreizeinlagen 106 eine Verankerung in einem Verankerungsgrund mit hoher Setzkraft bewerkstelligen können. Wie in Figur 1 gezeigt, können mehrere (insbesondere mindestens vier, im gezeigten Ausführungsbeispiel sind zehn dargestellt) Spreizeinlagen 106 an einer Außenseite der Dübelhülse 102 entlang der Dübelachse 116 aufgereiht sein. Die in Figur 1 dargestellten Spreizeinlagen 106 bilden somit eine axiale Reihe von Spreizeinlagen 106, die entlang einer geradlinigen Erstreckungsrichtung an der Außenseite der Dübelhülse 102 angeformt sind. Es können auch mehrere (zum Beispiel zwei, drei oder vier) parallele Reihen von axial aufgereihten Spreizeinlagen 106 an der Außenseite der Dübelhülse 102 vorgesehen sein. Beispielsweise kann eine zweite solche Reihe an der anderen halben Umfangsfläche des Dübels 100, die in Figur 1 nicht dargestellt ist, vorgesehen sein. Dies führt zu einer symmetrischen Spreizwirkung des Dübels 100.

Bei dem Dübel 100 gemäß Figur 1 sind die Spreizeinlagen 106 als dreieckige Kissen ausgebildet. Obwohl diese Form besonders vorteilhaft ist, sind alternative Formgebungen (zum Beispiel langgestreckte Spreizeinlagen, viereckige Spreizeinlagen, runde Spreizeinlagen, etc.) möglich. Wie gezeigt, bilden die als dreieckige Kissen ausgebildeten Spreizeinlagen 106 jeweils paarweise einen gemeinsamen rechteckigen Spreizeinlagebereich 130. Für einen jeweiligen Spreizeinlagebereich 130 ist jeweils eine diagonale Aussparung 118 zwischen den Spreizeinlagen 106 des jeweiligen Paars gebildet, die sich auch durch die Dübelhülse 102 hindurch erstrecken kann. Dadurch ist ein separates Spreizen der beiden Spreizeinlagen 106 des Paars ermöglicht. Ferner ist axial zwischen benachbarten rechteckigen Spreizeinlagebereichen 130 eine jeweilige tangentiale Aussparung 132 gebildet, die sich auch durch die Dübelhülse 102 hindurch erstrecken kann. Die Aussparung 132 fördert ein separates Spreizen unterschiedlicher Spreizeinlagebereiche 130. Dadurch ist sichergestellt, dass einzelne Spreizeinlagen 106 auch in relativ kleine Hohlräume in einem Verankerungsgrund ausklappen können bzw. mit relativ geringer Kraft zum Aufspreizen oder Ausklappen gebracht werden können.

Wie in Figur 1 ferner gezeigt ist, sind die Spreizeinlagen 106 mittels Verbindungsstegen 114 miteinander verbunden. Insbesondere sind mehrere im Wesentlichen punktförmige Verbindungsstege 114 aus dem zweiten Kunststoff vorgesehen, von denen jeder zwei jeweils entlang einer Dübelachse 116 des Dübels 100 benachbarte Spreizeinlagen 106 eines jeweiligen Spreizeinlegebereichs 130 miteinander verbindet. Darüber hinaus ist ein sich axial erstreckender und hier im Wesentlichen kammförmig geformter Verbindungssteg 114 aus dem zweiten Kunststoff vorgesehen, der eine Vielzahl der Spreizeinlagen 106 miteinander verbindet. Dieser Verbindungssteg 114 erstreckt sich entlang der gesamten axial aufgereihten Spreizeinlagen 106. Genauer gesagt verbindet der kammförmige Verbindungssteg 114 jeweils eine Spreizeinlage 106 jedes Spreizeinlagebereichs 130 miteinander. Durch die punktförmigen Verbindungsstege 114 und den kammförmigen Verbindungssteg 114 sind somit alle axial aufgereihten Spreizeinlagen 106 miteinander verbunden. Wenn die Spreizeinlagen 106 als zweite Spritzgusskomponente auf die Dübelhülse 102 als erste Spritzgusskomponente aufgespritzt werden, entstehen durch den Fluss des noch flüssigen Kunststoffs auch die Verbindungsstege 114 ohne Zusatzaufwand. Diese erhöhen die Integrität des Dübels 100 als Ganzes.

Je nach Konfiguration können die dünnen Verbindungsstege 114 ausgebildet werden, eine Steifigkeit von beim Spreizen des Dübels 100 nach außen klappenden Spreizeinlagen 106 zu erhöhen. Die Verbindungsstege 114 können ausgebildet werden, beim Spreizen des Dübels 100 ein Ausklappen der Spreizeinlagen 106 gegeneinander zu inhibieren oder zu hemmen. Vorteilhaft werden die Verbindungsstege 114 ausgebildet, dass sie keine Versteifung der Dübelhülse 102 bewirken. Auf diese Weise kann durch Konfiguration der Verbindungsstege 114 die Setzkraft und/oder die Tragfähigkeit des Dübels 100 eingestellt werden und auf die Erfordernisse einer spezifischen Anwendung hin adaptiert werden.

Wie bereits angesprochen, kann die Dübelhülse 102 als eine erste Spritzgusskomponente gebildet werden und können die Spreizeinlagen 106 als eine zweite Spritzgusskomponente gebildet werden, die auf die erste Spritzgusskomponente aufgespritzt und/oder in die erste Spritzgusskomponente eingespritzt wird. Vorteilhaft kann der Dübel 100 im Mehrkomponentenspritzgussverfahren hergestellt werden, alternativ kann der Dübel 100 mittels 3D-Druckens, etc. hergestellt werden. Bevorzugt wird aber die Dübelhülse 102 mittels Spritzgießens hergestellt und werden die Spreizeinlagen 106 ebenfalls mittels Spritzgießens hergestellt. Insbesondere können die Spreizeinlagen 106 auf die Dübelhülse 102 aufgespritzt werden. Auf diese Weise kann ein Dübel 100 mit hoher mechanischer Integrität erhalten werden, bei dem die Dübelhülse 102 und die Spreizeinlagen 106 im unverspreizten Zustand dreh- und zugfest miteinander verbunden sind. Dies ermöglicht es einem Benutzer, den Dübel 100 vor dem Setzen einstückig zu handhaben. Dies erhöht den Benutzerkomfort und unterdrückt die Gefahr einer Fehlfunktion. Wie gezeigt, umhüllen die Spreizeinlagen 106 die Dübelhülse 102 im unverspreizten Zustand, was ebenfalls durch ein Mehrkomponentenspritzgussverfahren erreicht werden kann. Diese Geometrie erlaubt ein kraftsparendes Spreizen der weicheren Dübelhülse 102, die einzig mit dem Befestigungselement in Berührungskontakt gerät. Ferner erlaubt diese Geometrie eine hohe Tragfähigkeit, da die außenseitigen harten Spreizeinlagen 106 unmittelbar an den Verankerungsgrund angrenzen und gegen diesen gedrückt oder in diesen ausgeklappt werden können. Somit wird beim Setzen des Dübels 100 die Dübelhülse 102 durch das Befestigungselement selbst aufgespreizt und werden die Spreizeinlagen 106 durch die Dübelhülse 102 aufgespreizt.

Figur 1 zeigt auch, dass die Dübelhülse 102 in ihrer Umfangsfläche eine Mehrzahl von Aussparungen 118, 132 aufweist. Genauer gesagt ist eine Kombination von sich schräg zu einer Dübelachse 116 erstreckenden Aussparungen 118 und von sich tangential erstreckenden Aussparungen 132 vorgesehen. Diese Kombination erleichtert ein Spreizen der Dübelhülse 102 und fördert somit ebenfalls eine geringe Setzkraft.

Mit Vorteil können Spreizeinlagen 106 des Dübels 100 mittels Scharnieren 126 an die Dübelhülse 102 angebunden sein, die sich entlang der Längsachse bzw. der Dübelachse 116 erstrecken. Somit kann ein Ausklappen dieser Spreizeinlagen 106 durch die Scharniere 126 erleichtert werden und in definierter Weise erfolgen. Die Scharniere 126 bilden anschaulich Schwachstellen der Dübelhülse 102, sodass ein Klappen von Spreizeinlagen 106 entlang dieser Scharniere 126 erfolgt. Somit sind die Scharniere 126 als Filmscharniere aus dem ersten Kunststoff der Dübelhülse 102 gebildet. Dies ermöglicht einen geringen Herstellungsaufwand und eine definierte Setzfunktion des Dübels 100.

Die Dübelhülse 102 ist aus einem weichen ersten Kunststoff gebildet, wodurch sich die Schraube einfach einschrauben lässt. Auch die Anbindungen für die Spreizeinlagen 106, welche beim Setzen des Dübels 100 nach außen gedrückt werden, um einen Hinterschnitt zu erzeugen, sind aus dem weichen ersten Kunststoff ausgeführt. Die Spreizeinlagen 106 hingegen sind als einzelne Elemente zur äußeren Oberfläche des Dübels 100 hin angeordnet bzw. werden zur Hinterschnitterzeugung eingesetzt und sind aus dem harten zweiten Kunststoff ausgeführt.

Beim Herstellen des Dübels 100 im Zweikomponentenspritzgussverfahren werden die harten Elemente 106, 114 in einem gemeinsamen Spritzgusszyklus erzeugt. Deshalb werden zusätzlich zu den Spreizeinlagen 106 die Verbindungsstege 114 generiert, die die einzelnen Spreizeinlagen 106 aus dem harten Kunststoff miteinander verbinden. Die Verbindungsstege 114 können einerseits die Steifigkeit der Spreizeinlagen 106, welche nach außen geklappt werden, erhöhen oder das Ausklappen der Spreizeinlagen 106 gegeneinander verhindern. Die harten Verbindungen können nicht einfach abreißen.

**Figur 2** zeigt eine Seitenansicht eines Dübels 100 gemäß einem anderen exemplarischen Ausführungsbeispiel der Erfindung.

Der Dübel 100 gemäß Figur 2 unterscheidet sich von dem Dübel 100 gemäß Figur 1 insbesondere dadurch, dass gemäß Figur 2 der kammförmige Verbindungssteg 114 weggelassen ist und stattdessen auch benachbarte Spreizeinlagen 106 von benachbarten Spreizeinlagebereichen 130 miteinander paarweise durch individuelle Verbindungsstege 114 verbunden sind. Von diesem Verbindungsstegen 114 verbindet jeder zwei jeweils entlang der Dübelachse 116 des Dübels 100 benachbarte Spreizeinlagen 106 miteinander.

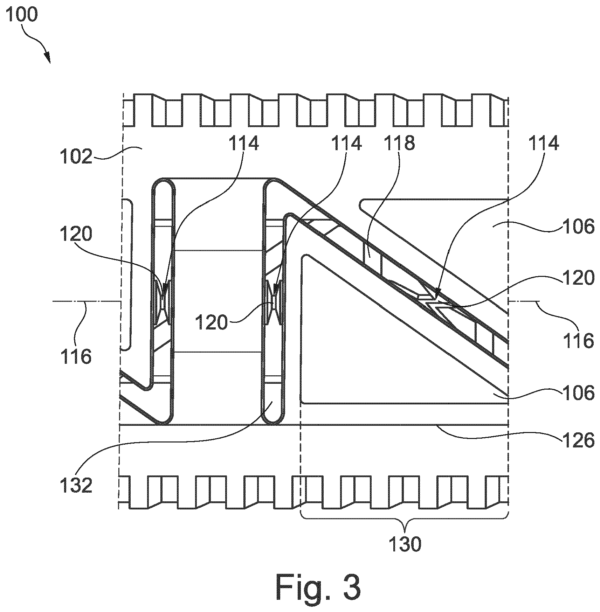

**Figur 3** zeigt eine vergrößerte Seitenansicht eines Teils des Dübels 100 gemäß Figur 2.

Figur 3 zeigt, dass die Verbindungsstege 114 eine Sollbruchstelle 120 aufweisen, die zum Brechen beim Spreizen des Dübels 100 ausgebildet ist. Die Verbindungsstege 114 gemäß Figur 2 und Figur 3 können so angeordnet werden, dass keine Versteifung der auszuklappenden Spreizeinlagen 106 entsteht. Die Verbindungsstege 114 sind zu diesem Zweck mit der Sollbruchstelle 120 versehen, damit zwar eine Verbindung zwischen den benachbarten Spreizeinlagen 106 besteht, welche aber schon bei geringer Belastung definiert abreißt und dadurch das Ausklappen erleichtert.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
eine Dübelhülse (102) aus einem ersten Kunststoff und mit einer Öffnung (104) zum Einführen eines Befestigungselements; und
eine Mehrzahl von keine weitere Dübelhülse bildenden Spreizeinlagen (106) aus einem zweiten Kunststoff, die an der Dübelhülse (102) angeordnet sind und zum Spreizen ausgebildet sind, wenn das Befestigungselement in die Öffnung (104) eingeführt wird;
wobei die Dübelhülse (102) alle Bereiche des Dübels bildet, mit denen das Befestigungselement beim Einführen in die Öffnung (104) in Kontakt kommt, um den Dübel (100) in einem Verankerungsgrund mit Kontakt gegen eine Wandung des Verankerungsgrunds zu drücken und/oder den Dübel (100) zur Hinterschnittbildung in mindestens einem Hohlraum im Verankerungsgrund auszuklappen;
wobei die Spreizeinlagen (106) Bereiche bilden, die beim Einführen des Befestigungselements in die Öffnung (104) mit Kontakt gegen eine Wandung des Verankerungsgrunds gedrückt werden und/oder zur Hinterschnittbildung in mindestens einem Hohlraum in dem Verankerungsgrund ausklappen; und
wobei der erste Kunststoff weicher als der zweite Kunststoff ist.

2. Dübel (100) gemäß Anspruch 1, des Weiteren mit zumindest einem der folgenden Merkmale:
wobei die Dübelhülse (102) einen Fuß (108) mit der Öffnung (104) zum Einführen eines Befestigungselements und einen dem Fuß (108) gegenüberliegenden Kopf (110) aufweist, wobei die Dübelhülse (102) am Kopf (110) vorzugsweise einen Schlitz (112) zum Fördern des Spreizens der Dübelhülse (102) durch das Befestigungselement aufweist;
wobei jede der Spreizeinlagen (106) einen Teil einer Außenfläche des Dübels (100) bildet;
wobei zumindest ein Teil der Spreizeinlagen (106) an einer Außenseite der Dübelhülse (102) und entlang einer Dübelachse (116) aufgereiht ist, insbesondere als eine Reihe oder als mehrere parallele Reihen von axial aufgereihten Spreizeinlagen (106);
wobei zumindest ein Teil der Spreizeinlagen (106) als dreieckige Kissen ausgebildet ist, wobei die als dreieckige Kissen ausgebildeten Spreizeinlagen (106) vorzugsweise jeweils paarweise einen gemeinsamen rechteckigen Spreizeinlagebereich (130) bilden, insbesondere mit einer diagonalen Aussparung (118) zwischen Spreizeinlagen (106) eines jeweiligen Paars und/oder mit einer tangentialen Aussparung (132) zwischen benachbarten Spreizeinlagebereichen (130);
wobei die Dübelhülse (102) als eine erste Spritzgusskomponente gebildet ist und die Spreizeinlagen (106) als eine zweite Spritzgusskomponente gebildet sind, die auf die erste Spritzgusskomponente aufgespritzt und/oder in die erste Spritzgusskomponente eingespritzt ist;
wobei die Dübelhülse (102) und die Spreizeinlagen (106) im unverspreizten Zustand dreh- und zugfest miteinander verbunden sind;
wobei die Spreizeinlagen (106) die Dübelhülse (102) im unverspreizten Zustand zumindest teilweise umhüllen;
wobei die Dübelhülse (102) durch das Befestigungselement selbst aufspreizbar ist und die Spreizeinlagen (106) durch die Dübelhülse (102) aufspreizbar sind;
wobei die Spreizeinlagen (106) alle Bereiche des Dübels (100) bilden, die beim Einführen des Befestigungselements in die Öffnung (104) mit Kontakt gegen eine Wandung des Verankerungsgrunds gedrückt werden und/oder zur Hinterschnittbildung in mindestens einem Hohlraum in dem Verankerungsgrund ausklappen;
wobei der zweite Kunststoff Verstärkungsstrukturen aufweist, insbesondere faserverstärkt und/oder kugelverstärkt ist.

3. Dübel (100) gemäß einem der Ansprüche 1 und 2, wobei zumindest ein Teil der Spreizeinlagen (106) mittels mindestens eines Verbindungsstegs (114) miteinander verbunden sind.

4. Dübel (100) gemäß Anspruch 3, wobei der mindestens eine Verbindungssteg (114) mehrere Verbindungsstege (114) aufweist, von denen jeder zwei jeweils entlang einer Dübelachse (116) des Dübels (100) benachbarte Spreizeinlagen (106) miteinander verbindet.

5. Dübel (100) gemäß Anspruch 3 oder 4, wobei der mindestens eine Verbindungssteg (114) mindestens einen sich entlang einer Dübelachse (116) des Dübels (100) erstreckenden, insbesondere kammförmigen, Verbindungssteg (114) aufweist, der mindestens drei der Spreizeinlagen (106) miteinander verbindet.

6. Dübel (100) gemäß einem der Ansprüche 3 bis 5, wobei der mindestens eine Verbindungssteg (114) eine Sollbruchstelle (120) aufweist, die zum Brechen beim Spreizen des Dübels (100) ausgebildet ist.

7. Dübel (100) gemäß einem der Ansprüche 3 bis 6, wobei der mindestens eine Verbindungssteg (114) ausgebildet ist, eine Steifigkeit von beim Spreizen des Dübels (100) nach außen klappenden Spreizeinlagen (106) zu erhöhen, beim Spreizen des Dübels (100) ein Ausklappen der Spreizeinlagen (106) gegeneinander zu inhibieren oder keine Versteifung der Dübelhülse (102) zu bewirken.

8. Dübel (100) gemäß einem der Ansprüche 1 bis 7, wobei die Dübelhülse (102) in ihrer Umfangsfläche mindestens eine Aussparung (118), insbesondere mindestens eine sich schräg zu einer Dübelachse (116) erstreckende Aussparung (118) und/oder mindestens eine sich tangential erstreckende Aussparung (132), aufweist, die ein Spreizen der Dübelhülse (102) erleichtert.

9. Dübel (100) gemäß einem der Ansprüche 1 bis 8, wobei zumindest ein Teil der Spreizeinlagen (106) mittels mindestens eines Scharniers (126) an die Dübelhülse (102) angebunden ist, wobei das mindestens eine Scharnier (126) vorzugsweise aus Material, insbesondere lokal gedünntem Material, der Dübelhülse (102) gebildet ist, wobei weiter bevorzugt das mindestens eine Scharnier (126) ein Filmscharnier ist und sich das mindestens eine Scharnier (126) entlang einer Dübelachse (116) erstreckt.

10. Dübelanordnung, aufweisend:
einen Dübel (100) gemäß einem der Ansprüche 1 bis 9; und
ein Befestigungselement, insbesondere eine Schraube, zum Einführen in oder eingeführt in die Öffnung (104) des Dübels (100).

11. Dübelanordnung gemäß Anspruch 10, aufweisend einen Verankerungsgrund, in den der Dübel (100) eingeführt ist,, wobei der Verankerungsgrund vorzugsweise ein Vollkörper ist oder ein Hohlkörper mit mindestens einer Hohlkammer ist.

12. Verfahren zum Herstellen eines Dübels (100), insbesondere eines Dübels (100) gemäß einem der Ansprüche 1 bis 9, wobei das Verfahren aufweist:
Bilden einer Dübelhülse (102) aus einem ersten Kunststoff und mit einer Öffnung (104) zum Einführen eines Befestigungselements;
Bilden einer Mehrzahl von keine weitere Dübelhülse bildenden Spreizeinlagen (106) aus einem gegenüber dem ersten Kunststoff härteren zweiten Kunststoff, die an der Dübelhülse (102) angeformt sind und zum Spreizen ausgebildet sind, wenn das Befestigungselement in die Öffnung (104) eingeführt wird;
Ausbilden des Dübels (100) derart, dass die Dübelhülse (102) alle Bereiche des Dübels (100) bildet, mit denen das Befestigungselement beim Einführen in die Öffnung (104) in Kontakt kommt, um den Dübel (100) in einem Verankerungsgrund mit Kontakt gegen eine Wandung des Verankerungsgrunds zu drücken und/oder den Dübel (100) zur Hinterschnittbildung in mindestens einem Hohlraum im Verankerungsgrund auszuklappen; und
Ausbilden des Dübels (100) derart, dass die Spreizeinlagen (106) Bereiche bilden, die beim Einführen des Befestigungselements in die Öffnung (104) mit Kontakt gegen eine Wandung des Verankerungsgrunds gedrückt werden und/oder zur Hinterschnittbildung in mindestens einem Hohlraum in dem Untergrund ausklappen.

13. Verfahren gemäß Anspruch 12, wobei das Verfahren ein Herstellen des Dübels (100) in einem Mehrkomponentenspritzgussverfahren aufweist.

14. Verfahren gemäß Anspruch 12 oder 13, wobei das Verfahren ein Bilden der Dübelhülse (102) mittels Spritzgießens und/oder ein Bilden der Spreizeinlagen (106) mittels Spritzgießens aufweist.

15. Verfahren gemäß einem der Ansprüche 12 bis 14, wobei das Verfahren ein Aufspritzen der Spreizeinlagen (106) auf ein Äußeres der Dübelhülse (102) aufweist.

## Claims

1. A dowel (100), comprising:
a dowel sleeve (102) made of a first plastic and having an opening (104) for inserting a fastening element; and
a plurality of expansion inserts (106) made of a second plastic not forming any further dowel sleeve, which are arranged on the dowel sleeve (102) and are configured to expand when the fastening element is inserted into the opening (104);
wherein the dowel sleeve (102) forms all regions of the dowel with which the fastening element comes into contact when inserted into the opening (104) in order to press the dowel (100) in an anchoring base with contact against a wall of the anchoring base and/or to fold out the dowel (100) to form an undercut in at least one cavity in the anchoring base;
wherein the expansion inserts (106) form regions which are pressed with contact against a wall of the anchoring base when the fastening element is inserted into the opening (104) and/or fold out to form an undercut in at least one cavity in the anchoring base; and
wherein the first plastic is softer than the second plastic.

2. The dowel (100) of claim 1, further comprising at least one of the following features:
wherein the dowel sleeve (102) has a foot (108) with the opening (104) for inserting a fastening element and a head (110) opposite the foot (108), wherein the dowel sleeve (102) preferably has a slot (112) at the head (110) for promoting expansion of the dowel sleeve (102) by the fastening element;
wherein each of the expansion inserts (106) forms a part of an outer surface of the dowel (100);
wherein at least some of the expansion inserts (106) are lined up on an outer side of the dowel sleeve (102) and along a dowel axis (116), in particular as a row or as a plurality of parallel rows of axially lined-up expansion inserts (106);
wherein at least some of the expansion inserts (106) are configured as triangular cushions, wherein the expansion inserts (106) configured as triangular cushions preferably each form a common rectangular expansion insert region (130) in pairs, in particular with a diagonal recess (118) between expansion inserts (106) of a respective pair and/or with a tangential recess (132) between adjacent expansion insert regions (130);
wherein the dowel sleeve (102) is formed as a first injection-molded component and the expansion inserts (106) are formed as a second injection-molded component which is applied onto the first injection-molded component and/or injected into the first injection-molded component;
wherein the dowel sleeve (102) and the expansion inserts (106) are connected to one another in a rotationally and tension-resistant manner in the unexpanded state;
wherein the expansion inserts (106) at least partially envelop the dowel sleeve (102) in the unexpanded state;
wherein the dowel sleeve (102) can be expanded by the fastening element itself and the expansion inserts (106) can be expanded by the dowel sleeve (102);
wherein the expansion inserts (106) form all regions of the dowel (100) which are pressed with contact against a wall of the anchoring base when the fastening element is inserted into the opening (104) and/or fold out to form an undercut in at least one cavity in the anchoring base;
wherein the second plastic has reinforcing structures, in particular is fiber-reinforced and/or ball-reinforced.

3. The dowel (100) of any one of claims 1 and 2, wherein at least some of the expansion inserts (106) are connected to one another by means of at least one connecting web (114).

4. The dowel (100) of claim 3, wherein the at least one connecting web (114) has a plurality of connecting webs (114), each of which connects two expansion inserts (106) adjacent along a dowel axis (116) of the dowel (100) to one another.

5. The dowel (100) of claim 3 or 4, wherein the at least one connecting web (114) has at least one, in particular comb-shaped, connecting web (114) extending along a dowel axis (116) of the dowel (100) and connecting at least three of the expansion inserts (106) to one another.

6. The dowel (100) of any one of claims 3 to 5, wherein the at least one connecting web (114) has a predetermined breaking point (120) configured to break when the dowel (100) is expanded.

7. The dowel (100) of any one of claims 3 to 6, wherein the at least one connecting web (114) is configured to increase a rigidity of expansion inserts (106) folding outwards when the dowel (100) is expanded, to inhibit folding out of the expansion inserts (106) against one another when the dowel (100) is expanded, or to cause no stiffening of the dowel sleeve (102).

8. The dowel (100) of any one of claims 1 to 7, wherein the dowel sleeve (102) has at least one recess (118) in its circumferential surface, in particular at least one recess (118) extending obliquely to a dowel axis (116) and/or at least one recess (132) extending tangentially, which facilitates expansion of the dowel sleeve (102).

9. The dowel (100) of any one of claims 1 to 8, wherein at least some of the expansion inserts (106) are connected to the dowel sleeve (102) by means of at least one hinge (126), wherein the at least one hinge (126) is preferably formed from material, in particular locally thinned material, of the dowel sleeve (102), wherein further preferably the at least one hinge (126) is a film hinge and the at least one hinge (126) extends along a dowel axis (116).

10. A dowel assembly, comprising:
a dowel (100) of any one of claims 1 to 9; and
a fastening element, in particular a screw, for insertion into or inserted into the opening (104) of the dowel (100).

11. The dowel assembly of claim 10, comprising an anchoring base into which the dowel (100) is inserted, wherein the anchoring base is preferably a solid body or is a hollow body with at least one hollow chamber.

12. A method of manufacturing a dowel (100), in particular a dowel (100) of any one of claims 1 to 9, the method comprising:
forming a dowel sleeve (102) from a first plastic and having an opening (104) for inserting a fastening element;
forming a plurality of expansion inserts (106) not forming any further dowel sleeve from a second plastic harder than the first plastic, which are formed on the dowel sleeve (102) and are configured to expand when the fastening element is inserted into the opening (104);
forming the dowel (100) such that the dowel sleeve (102) forms all regions of the dowel (100) with which the fastening element comes into contact when inserted into the opening (104) in order to press the dowel (100) in an anchoring base with contact against a wall of the anchoring base and/or to fold out the dowel (100) to form an undercut in at least one cavity in the anchoring base; and
forming the dowel (100) such that the expansion inserts (106) form regions which are pressed with contact against a wall of the anchoring base when the fastening element is inserted into the opening (104) and/or fold out to form an undercut in at least one cavity in the substrate.

13. The method of claim 12, wherein the method comprises manufacturing the dowel (100) in a multi-component injection molding process.

14. The method of claim 12 or 13, wherein the method comprises forming the dowel sleeve (102) by means of injection molding and/or forming the expansion inserts (106) by means of injection molding.

15. The method of any one of claims 12 to 14, wherein the method comprises applying the expansion inserts (106) onto an exterior of the dowel sleeve (102).

## Revendications

1. Cheville (100), présentant :
un manchon de cheville (102) constitué d'une première matière plastique et pourvue d'une ouverture (104) pour insérer un élément de fixation ; et
une pluralité d'inserts d'expansion (106), ne formant pas un autre manchon de cheville, constitués d'une seconde matière plastique, qui sont agencés sur le manchon de cheville (102) et sont conçus pour s'expanser lorsque l'élément de fixation est introduit dans l'ouverture (104) ;
dans laquelle le manchon de cheville (102) forme toutes les zones de la cheville avec lesquelles l'élément de fixation vient en contact lorsqu'il est introduit dans l'ouverture (104), afin de presser la cheville (100) dans un support d'ancrage avec contact contre une paroi du support d'ancrage et/ou de déployer la cheville (100) dans au moins une cavité dans le support d'ancrage pour former une contre-dépouille ;
dans laquelle les inserts d'expansion (106) forment des zones qui, lors de l'introduction de l'élément de fixation dans l'ouverture (104), sont pressées avec contact contre une paroi du support d'ancrage et/ou se déploient dans au moins une cavité dans le support d'ancrage pour former une contre-dépouille ; et
dans laquelle la première matière plastique est plus souple que la seconde matière plastique.

2. Cheville (100) selon la revendication 1, présentant en outre au moins une des caractéristiques ci-dessous :
dans laquelle le manchon de cheville (102) présente un pied (108) avec l'ouverture (104) permettant d'introduire un élément de fixation et une tête (110) opposée au pied (108), dans laquelle le manchon de cheville (102) présente au niveau de la tête (110) de préférence une fente (112) permettant de favoriser l'expansion du manchon de cheville (102) à travers l'élément de fixation ;
dans laquelle chacun des inserts d'expansion (106) fait partie d'une surface extérieure de la cheville (100) ;
dans laquelle au moins une partie des inserts d'expansion (106) est alignée sur un côté extérieur du manchon de cheville (102) et le long d'un axe de cheville (116), en particulier sous la forme d'une rangée ou de plusieurs rangées parallèles d'inserts d'expansion (106) alignés axialement ;
dans laquelle au moins une partie des inserts d'expansion (106) est conçue sous la forme des coussinets triangulaires, dans laquelle les inserts d'expansion (106) conçus sous la forme de coussinets triangulaires formant de préférence deux à deux une zone d'insert d'expansion rectangulaire commune (130), en particulier avec un évidement diagonal (118) entre les inserts d'expansion (106) d'une paire respective et/ou avec un évidement tangentiel (132) entre des zones d'insert d'expansion adjacentes (130) ;
dans laquelle le manchon de cheville (102) est formé sous la forme d'un premier composant de moulage par injection et les inserts d'expansion (106) sont formés sous la forme d'un second composant de moulage par injection qui est surmoulé sur le premier composant de moulage par injection et/ou injecté dans le premier composant de moulage par injection ;
dans laquelle le manchon de cheville (102) et les inserts d'expansion (106) sont reliés les uns aux autres d'une manière résistant à la rotation et à la traction dans l'état non-expansé ;
dans laquelle les inserts d'expansion (106) enveloppent au moins partiellement le manchon de cheville (102) dans l'état non-expansé ;
dans laquelle le manchon de cheville (102) peut être expansés par l'élément de fixation lui-même et les inserts d'expansion (106) peuvent être expansés par le manchon de cheville (102) ;
dans laquelle les inserts d'expansion (106) forment toutes les zones de la cheville (100) qui, lors de l'introduction de l'élément de fixation dans l'ouverture (104), sont pressées avec contact contre une paroi du support d'ancrage et/ou se déploient dans au moins une cavité dans le support d'ancrage pour former une contre-dépouille ;
dans lequel la seconde matière plastique présente des structures de renforcement, en particulier des fibres de renforcement et/ou des billes de renforcement.

3. Cheville (100) selon l'une quelconque des revendications 1 et 2, dans laquelle au moins une partie des inserts d'expansion (106) sont reliés les uns aux autres au moyen d'au moins une entretoisé de liaison (114).

4. Cheville (100) selon la revendication 3, dans laquelle la au moins une entretoise de liaison (114) présente plusieurs entretoises de liaison (114), dont chacune relie deux inserts d'expansion (106) adjacents respectivement le long d'un axe de cheville (116) de la cheville (100).

5. Cheville (100) selon la revendication 3 ou 4, dans laquelle au moins une entretoise de liaison (114) présente au moins une entretoise de liaison (114) s'étendant le long d'un axe de cheville (116) de la cheville (100), en particulier en forme de peigne, qui relie au moins trois des inserts d'expansion (106).

6. Cheville (100) selon l'une quelconque des revendications 3 à 5, dans laquelle au moins une entretoise de liaison (114) présente un point de rupture théorique (120) qui est conçu pour se rompre lors de l'expansion de la cheville (100).

7. Cheville (100) selon l'une quelconque des revendications 3 à 6, dans laquelle au moins une entretoise de liaison (114) est conçue pour augmenter la rigidité des inserts d'expansion (106) se pliant vers l'extérieur lors de l'expansion de la cheville (100), pour empêcher l'expansion des inserts d'expansion (106) les uns contre les autres lors de l'expansion de la cheville (100) ou pour ne pas provoquer de raidissement du manchon de cheville (102).

8. Cheville (100) selon l'une quelconque des revendications 1 à 7, dans laquelle le manchon de cheville (102) présente dans sa surface périphérique au moins un évidement (118) en particulier au moins un évidement (118) s'étendant obliquement par rapport à un axe de cheville (116) et/ou au moins un évidement (132) s'étendant tangentiellement, qui facilite l'expansion du manchon de cheville (102).

9. Cheville (100) selon l'une quelconque des revendications 1 à 8, dans laquelle au moins une partie des inserts d'expansion (106) est reliée au manchon de cheville (102) au moyen d'au moins une charnière (126), dans laquelle au moins une charnière (126) est formée de préférence à partir d'un matériau, en particulier d'un matériau aminci localement, du manchon de cheville (102), dans laquelle de préférence au moins une charnière (126) est une charnière à film et au moins une charnière (126) s'étend le long d'un axe de cheville (116).

10. Agencement de chevilles, présentant :
une cheville (100) selon l'une quelconque des revendications 1 à 9 ; et
un élément de fixation, en particulier une vis, destiné à être introduit dans l'ouverture (104) de la cheville (100).

11. Agencement de cheville selon la revendication 10, présentant un support d'ancrage dans lequel la cheville (100) est introduite, dans laquelle le support d'ancrage est de préférence un corps plein ou un corps creux avec au moins une chambre creuse.

12. Procédé de fabrication d'une cheville (100), en particulier d'une cheville (100) selon l'une quelconque des revendications 1 à 9, dans lequel le procédé comprend les étapes consistant à :
former un manchon de cheville (102) en une première matière plastique et avec une ouverture (104) pour introduire un élément de fixation ;
former une pluralité d'inserts d'expansion (106) ne formant pas un autre manchon de cheville en une deuxième matière plastique plus dure que la première matière plastique, qui sont formés sur le manchon de cheville (102) et sont conçus pour s'expanser lorsque l'élément de fixation est introduit dans l'ouverture (104) ;
former la cheville de telle sorte que le manchon de cheville (102) forme toutes les zones de la cheville (100) avec lesquelles l'élément de fixation vient en contact lorsqu'il est introduit dans l'ouverture (104), afin de presser la cheville (100) dans un support d'ancrage avec contact contre une paroi du support d'ancrage et/ou de déployer la cheville (100) dans au moins une cavité dans le support d'ancrage pour former une contre-dépouille ; et
former la cheville de telle sorte que les inserts d'expansion (106) forment des zones qui, lors de l'introduction de l'élément de fixation dans l'ouverture (104), sont pressées avec contact contre une paroi du support d'ancrage et/ou se déploient dans au moins une cavité dans le support pour former une contre-dépouille ; et

13. Procédé selon la revendication 12, dans lequel le procédé comprend la fabrication de la cheville (100) dans un procédé de moulage par injection à plusieurs composants.

14. Procédé selon la revendication 12 ou 13, dans lequel le procédé comprend la formation du manchon de cheville (102) par moulage par injection et/ou la formation des inserts d'expansion (106) par moulage par injection.

15. Procédé selon l'une quelconque des revendications 12 à 14, dans lequel le procédé comprend l'étape consistant à surmouler les inserts d'expansion (106) sur un extérieur du manchon de cheville (102).
